# FASCICULE DE BREVET EUROPEEN

(11) **EP 0 430 742 B1**
(45) Date de publication et mention de la délivrance du brevet: **18.05.1994**
(21) Numéro de dépôt: 90403193.7
(22) Date de dépôt: 09.11.1990
(51) Int. Cl.: F16D 3/84

(54) **Joint de transmission**
Übertragungsgelenk
Transmission joint

(30) Priorité: 30.11.1989 FR 8915827
(43) Date de publication de la demande: 05.06.1991
(73) Titulaire: GKN GLAENZER SPICER, F-78955 Carrières-sous-Poissy (FR)
(72) Inventeur: Moulinet, François, F-78510 Triel sur Seine (FR)
(74) Mandataire: Polus, Camille

(56) Documents cités:
- DE-A- 2 605 459
- FR-A- 1 438 038
- GB-A- 2 085 097
- GB-A- 2 091 381
- US-A- 2 945 364
- US-A- 3 204 427

## Description

La présente invention concerne un joint de transmission du type comportant un corps solidaire d'un premier arbre et qui délimite une cavité ouverte à son extrémité opposée au premier arbre et à l'intérieur de laquelle est formée au moins une paire de chemins de roulement entre lesquels est reçu un élément de roulement relié à un second arbre et comportant un soufflet d'étanchéité de la cavité dont une première extrémité est reliée au corps et dont la seconde extrémité est reliée au second arbre.

On connait du document US-A-2.945.364 un joint de transmission de ce type dans lequel le bord libre d'extrémité axiale du corps de joint qui délimite l'ouverture de la cavité est équipé d'un capot de forme complémentaire qui s'étend axialement depuis ledit bord en direction du second arbre, dans lequel la première extrémité du soufflet est fixée au capot, et dans lequel le capot comporte une face radiale plane d'extrémité qui coopère avec une face radiale plane correspondante du bord libre d'extrémité axiale du corps de joint, des moyens de maintien en appui de ces deux surfaces radiales étant prévus.

Cet agencement permet de simplifier le montage du soufflet d'étanchéité, mais le montage du capot sur le corps de joint est une opération qui nécessite toujours des usinages importants du corps de joint ainsi que des opérations mécaniques d'emmanchement à force et/ou de sertissage ou des opérations de collage qui sont peu aisées à réaliser.

Afin de remédier à ces inconvénients, l'invention propose un joint de transmission du type mentionné précédemment, caractérisé en ce que les moyens de maintien en appui comportent au moins une patte d'accrochage du capot qui s'étend axialement en direction du premier arbre et dont l'extrémité libre recourbée est reçue dans une encoche correspondante formée dans le corps.

On obtient ainsi un montage particulièrement simple du capot et ne nécessitant que l'usinage d'une face radiale d'appui sur le corps de joint, l'encoche pouvant être réalisée venue de moulage.

Selon d'autres caractéristiques de l'invention :
- la patte d'accrochage s'étend axialement à l'intérieur de la cavité du joint de transmission de manière que son extrémité libre recourbée soit reçue dans une encoche correspondante formée dans la paroi interne de la cavité ;
- un joint d'étanchéité est prévu entre les surfaces radiales en appui par exemple dans une gorge du capot ;
- le joint de transmission comporte des moyens d'indexation angulaire du capot par rapport au corps du joint ;
- l'extrémité libre du capot opposée au corps du joint comporte une surface cylindrique de portée sur laquelle est fixée la première extrémité en forme de manchon du soufflet ; et
- le capot est réalisé en matière plastique.

D'autres caractéristiques et avantages de l'invention apparaîtront à la lecture de la description détaillée qui va suivre pour la compréhension de laquelle on se reportera au dessin annexé dans lequel :
- La figure 1 est une vue en coupe axiale partielle d'un joint de transmissoin réalisé conformément aux enseignements de l'invention ;
- la figure 2 est une vue de détail d'un second mode de réalisation de l'invention ; et
- la figure 3 est une vue de détail d'un troisième mode de réalisation de l'invention.

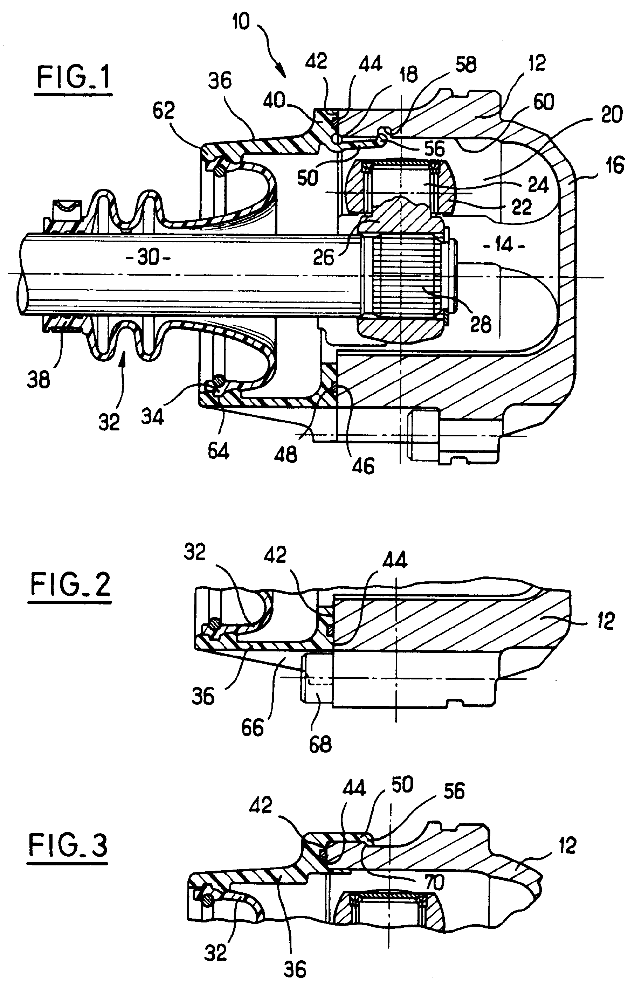

On a représenté à la figure 1 un joint homocinétique de transmission à galet 10.

Le joint 10 comporte un corps de joint 12, également appelé tulipe, qui est prévu pour être relié à un premier arbre (non représenté).

Le corps de joint 12 délimite une cavité interne 14 qui, du côté du premier arbre, est fermée par un fond 16 et qui est ouverte à son extrémité opposée, l'ouverture de la cavité 14 étant délimitée par un bord axial libre d'extrémité 18.

Dans le mode de réalisation représenté à la figure 1, le joint de transmission est un joint du type tripode et le corps 12 comporte donc trois paires de chemins de roulement 20. Le joint de transmission possède une symétrie ternaire autour de l'axe d'alignement X-X et chaque paire de chemins de roulement 20 reçoit un galet de roulement 22 qui est monté à rotation sur un bras correspondant 24 d'un tripode 26.

Le tripode 26 est fixé à l'extrémité 28 d'un second arbre 30.

Afin d'assurer l'étanchéité de la cavité 14 qui reçoit le tripode 26 et les galets 24 et qui est rempli d'un agent de lubrification, le joint 10 comporte un soufflet d'étanchéité 32.

Conformément à l'invention, la première extrémité 34 en forme de manchon du soufflet 32 est reliée au corps de joint 12 par l'intermédiaire d'un capot 36.

D'une manière connue, la seconde extrémité 38 en forme de manchon du soufflet d'étanchéité 32 est fixée au second arbre 30.

Le capot 36 est une pièce en matière plastique qui s'étend axialement depuis le bord d'extrémité 18 du corps 12 en direction du second arbre 30 et parallèlement à l'axe du corps 12.

A sa première extrémité latérale, de droite en considérant la figure 1, 40 le capot comporte une face radiale plane 42 qui est en appui contre une face radiale 44 du corps de joint 12.

La face radiale 44 est une face plane dressée dans la zone du bord d'extrémité axiale 18 du corps du joint 12 pour permettre une mise en appui correcte du capot 36. Un joint d'étanchéité 46 entre les surfaces radiales 42 et 44 est prévu dans une gorge 48 formée dans la face radiale 42 du capot 36. Le joint 46 peut être préalablement inclus dans le capot 36 lors de l'opération d'injection de ce dernier.

Le capot 36 est retenu axialement dans le corps 12 par trois pattes d'accrochage 50 qui, dans ce premier mode de réalisation, s'étendent axialement à l'intérieur de la cavité 14 pour que leurs extrémités libres recourbées 56 soient reçues dans des encoches correspondantes 58 formées dans la paroi interne brute 60 qui délimite la cavité 14.

La coopération des extrémités 56 avec les encoches 58, si ces dernières sont d'une longueur angulaire limitée, constitue des moyens d'indexation angulaire du capot 36 par rapport au corps du joint 12. Cette indexation angulaire est nécessaire du fait que la première extrémité 40 présente un profil complémentaire de celui du bord libre d'extrémité 18 qui n'est pas de révolution autour de l'axe X-X comme on peut le voir en comparant les parties supérieures et inférieures de la figure 1.

Par contre, à partir de sa première extrémité 40, le capot 36 possède une forme telle que sa seconde extrémité 62 soit de révolution. Ainsi la première extrémité 34 du soufflet 32 est en forme de manchon cylindrique et est maintenue et fixée dans une surface de portée cylindrique 64 ménagée à l'intérieur du capot 36.

Dans le second mode de réalisation représenté à la figure 2 où l'on a utilisé les mêmes chiffres de référence qu'à la figure 1 pour désigner des éléments identiques ou similaires, les moyens d'indexation angulaires du capot 36 par rapport au corps de joint 12 sont assurés par la coopération des ailes radiales externes 66 du capot, qui permettent le passage des vis 68 de montage du joint, avec la tête de ces vis.

Dans le troisième mode de réalisation représenté à la figure 3, les pattes d'accrochage 50 sont situées à l'extérieur du corps de joint 12 et leur extrémité recourbée 56 coopère avec un épaulement radial 70 prévu à la surface externe du corps de joint 12.

Les moyens d'indexation angulaire du capot 36 par rapport au corps de joint 12 sont constitués par des lames incurvées 72 qui s'étendent axialement à l'intérieur de la cavité 14 et qui coopèrent avec des portions de profil correspondant de la surface interne 60 de la cavité 14 qui joignent entre eux les deux chemins de roulement d'une même paire.

Le montage du soufflet 32 sur le corps de joint 12 par l'intermédiaire d'un capot 36 selon l'invention ne nécessite l'usinage par dressage que d'une seule surface 44 sur le corps de joint 12, les autres surfaces coopérant notamment avec les moyens d'accrochage et d'indexation angulaire pouvant être brutes.

## Revendications

1. Joint de transmission (10) du type comportant un corps de joint (12) solidaire d'un premier arbre et qui délimite une cavité (14) ouverte à son extrémité opposée au premier arbre et à l'intérieur de laquelle est formée au moins une paire de chemins de roulement (20) entre lesquels est reçu un élément de roulement (22) relié à un second arbre (30) et comportant un soufflet (32) d'étanchéité de la cavité (14) dont une première extrémité (34) est reliée au corps (12) et dont la seconde extrémité (38) est reliée au second arbre (30), et du type dans lequel le bord libre d'extrémité axiale (18) du corps de joint (12) qui délimite l'ouverture de la cavité (14) est équipé d'un capot (36) de forme complémentaire qui s'étend axialement depuis ledit bord (18) en direction du second arbre (30), dans lequel la première extrémité (34) du soufflet (32) est fixée au capot (36), et dans lequel le capot (36) comporte une face radiale plane d'extrémité (42) qui coopère avec une face radiale plane correspondante (44) du bord libre d'extrémité axiale (18) du corps de joint (12), des moyens de maintien en appui de ces deux surfaces radiales (42, 44) étant prévus, caractérisé en ce que les moyens de maintien en appui comportent au moins une patte (50) d'accrochage du capot (36) qui s'étend axialement en direction du premier arbre et dont l'extrémité libre recourbée (56) est reçue dans une encoche correspondante (58) formée dans le corps (12).

2. Joint de transmission selon la revendication 1, caractérisé en ce que la patte d'accrochage (50) s'étend axialement à l'intérieur de la cavité (14) du joint de transmission de manière que son extrémité libre recourbée (56) soit reçue dans une encoche correspondante formée dans la paroi interne de la cavité.

3. Joint de transmission selon l'une des revendications 1 ou 2, caractérisé en ce qu'il comporte un joint d'étanchéité (46) entre lesdites surfaces radiales (42, 44).

4. Joint de transmission selon la revendication 3, caractérisé en ce que le joint d'étanchéité est reçu dans une gorge de la face radiale plane (42) du capot (36).

5. Joint de transmission selon l'une quelconque des revendications précédentes, caractérisé en ce qu'il comporte des moyens d'indexation angulaire du capot (36) par rapport au corps de joint (12).

6. Joint de transmission selon l'une quelconque des revendications précédentes, caractérisé en ce que l'extrémité libre (62) du capot (36) opposée au corps de joint (12) comporte une surface cylindrique de portée (64) sur laquelle est fixée la première extrémité (34) en forme de manchon du soufflet (32).

7. Joint de transmission selon l'une quelconque des revendications précédentes, caractérisé en ce que le capot est réalisé en matière plastique.

## Patentansprüche

1. Antriebsgelenk (10) einer Art mit einem Gelenkkörper (12), der mit einer ersten Welle fest verbunden ist und einen an seinem der ersten Welle gegenüberliegenden Ende offenen Hohlraum (14) begrenzt, in dem wenigstens ein Paar von Laufbahnen (20) ausgebildet ist, zwischen welchen ein mit einer zweiten Welle (30) verbundenes Wälzelement (22) aufgenommen ist, und mit einem Ba1g (32) zum Abdichten des Hohlraums (14), dessen erstes Ende (34) mit dem Körper (12) und dessen zweites Ende (38) mit der zweiten Welle (30) verbunden ist, und von einer Art, bei welcher der der freie Rand des axialen Endes (18) des Gelenkkörpers (12), der die Öffnung des Hohlraums (14) begrenzt, mit einer Haube (36) komplementärer Form versehen ist, welche sich von dem Rand (18) axial in Richtung der zweiten Welle (30) erstreckt, bei welcher das erste Ende (34) des Balges (32) an der Haube (36) befestigt ist, und bei welcher die Haube (36) eine plane radiale Endfläche (42) aufweist, welche mit einer entsprechenden planen radialen Fläche (44) des freien Randes des axialen Endes (18) des Gelenkkörpers (12) zusammenwirkt, wobei Mittel zum Halten der beiden radialen Flachen (42, 44) in Anlage vorgesehen sind, dadurch gekennzeichnet, daß die Mittel zum Halten in Anlage wenigstens einen Lappen (50) zum Einhängen der Haube (36) aufweisen, der sich axial in Richtung der ersten Welle erstreckt und dessen gekrümmtes freies Ende (56) in einer im Körper (12) ausgebildeten entsprechenden Kerbe (58) aufgenommen ist.

2. Antriebsgelenk nach Anspruch 1, dadurch gekennzeichnet, daß der Einhänglappen (50) sich axial im Inneren des Hohlraums (14) des Antriebsgelenks so erstreckt, daß sein gekrümmtes freies Ende (56) in einer in der Innenwand des Hohlraums ausgebildeten entsprechenden Kerbe aufgenommen ist.

3. Antriebsgelenk nach einem der Ansprüche 1 oder 2, dadurch gekennzeichnet, daß es eine Dichtung (46) zwischen den radialen Flächen (42, 44) aufweist.

4. Antriebsgelenk nach Anspruch 3, dadurch gekennzeichnet, daß die Dichtung in einer Nut der planen radialen Fläche (42) der Haube (36) aufgenommen ist.

5. Antriebsgelenk nach irgendeinem der vorstehenden Ansprüche, dadurch gekennzeichnet, daß es Mittel zum winkelmäßigen Ausrichten der Haube (36) in Bezug auf den Gelenkkörper (12) aufweist.

6. Antriebsgelenk nach irgendeinem der vorstehenden Ansprüche, dadurch gekennzeichnet, daß das zum Gelenkkörper (12) entgegengesetzte freie Ende (62) der Haube (36) eine zylindrische Auflagefläche (64) aufweist, an welcher das muffenförmige erste Ende (34) des Balges (32) befestigt ist.

7. Antriebsgelenk nach irgendeinem der vorstehenden Ansprüche, dadurch gekennzeichnet, daß die Haube aus Kunststoff besteht.

## Claims

1. Transmission joint (10) comprising a joint body (12), which is integral to a first shaft and defines a cavity (14) open at its end opposite to said first shaft and inside which at least one pair of running tracks (20) is formed, between which a running element (22) connected to a second shaft (30) is received, and comprising a bellows (32) sealing said cavity (14), a first end (34) of which is connected to said body (12) and the second end (38) of which is connected to said second shaft (30), wherein the axial free end edge (18) of said joint body (12) defining the opening of said cavity (14)is provided with a correspondingly shaped cap piece (36) extending axially from said edge (18) in the direction of said second shaft (30), wherein the first end (34) of said bellows (32) is attached to said cap piece (36) and wherein said cap piece (36) comprises a plane radial end face (42), which interacts with a corresponding plane radial face (44) of said axial free end edge (18) of said joint body (12), means being provided to maintain the bearing between these two radial surfaces (42, 44), characterised in that said means for maintaining the bearing comprise at least one tab (50) for fastening said cap piece (36), which extends axially towards said first shaft and of which the free bent-back edge (56) is received in a corresponding notch (58) formed in said body (12).

2. Transmission joint according to Claim 1, characterised in that the fastening tab (50) extends axially inside the cavity (14) of said transmission joint in such a way that its free bent-back edge (56) is received in a corresponding notch formed in the interior wall of the cavity.

3. Transmission joint according to Claim 1 or 2, characterised in that it comprises a sealing strip (46) between said radial surfaces (42, 44).

4. Transmission joint according to Claim 3, characterised in that the sealing strip is received in a groove in the plane radial face (42) of the cap piece (36).

5. Transmission joint according to any of the preceding claims, characterised in that it comprises means to permit angular indexation of the cap piece (36) in relation to the joint body (12).

6. Transmission joint according to any of the preceding claims, characterised in that the free end (62) of the cap piece (36) opposite the joint body (12) has a cylindrical support surface (64), to which the first sleeve-shaped end (34) of the bellows (32) is attached.

7. Transmission joint according to any of the preceding claims, characterised in that the cap piece is composed of plastic material.
